# EUROPEAN PATENT SPECIFICATION

(11) **EP 2 970 538 B1**
(45) Date of publication and mention of the grant of the patent: **20.10.2021**
(21) Application number: 14721596.6
(22) Date of filing: 12.03.2014
(51) Int. Cl.: C08F 220/06, C08F 220/18, C08F 220/22

(54) **POLYMERIZATION PROCESS PROTECTION MEANS**
SCHUTZMITTEL FÜR EIN POLYMERISATIONSVERFAHREN
MOYEN DE PROTECTION DANS UN PROCÉDÉ DE POLYMÉRISATION

(30) Priority: 15.03.2013 US 201361786712 P
(43) Date of publication of application: 20.01.2016
(73) Proprietor: DuPont Electronics, Inc., Wilmington, DE 19805 (US)
(72) Inventor: CHAMBERS JR, Charles, Ray, Kingsport, Tennessee 37664 (US); FARNHAM, William, Brown, Hockessin, Delaware 19707 (US); SHEEHAN, Michael, Thomas, Liberty Hill, Texas 78642 (US); TRAN, Hoang, Vi, Wilmington, Delaware 19810 (US)
(74) Representative: Dehns
(86) International application number: PCT/US2014/024025
(87) International publication number: WO 2014/150700

(56) References cited:
- US-A1- 2009 253 074
- JIANHUA ZHOU ET AL: "Fluorinated polyacrylate emulsifier-free emulsion mediated by poly(acrylic acid)-b-poly(hexafluorobutyl acrylate) trithiocarbonate via ab initio RAFT emulsion polymerization", CHEMICAL ENGINEERING JOURNAL, vol. 223, 8 March 2013 (2013-03-08), pages 8-17, XP055127648, ISSN: 1385-8947, DOI: 10.1016/j.cej.2013.02.117
- YANJUN CHEN ET AL: "Synthesis, characterization, and self-assembly of amphiphilic fluorinated gradient copolymer", JOURNAL OF APPLIED POLYMER SCIENCE, vol. 127, no. 3, 5 February 2013 (2013-02-05), pages 1485-1492, XP055127764, ISSN: 0021-8995, DOI: 10.1002/app.37556
- None

## Description

### Field of the Invention

This invention provides a method for protecting monomers, having acid labile groups therein, during the polymerization with other monomers which have characteristics which adversely affect the monomers having said acid labile groups.

### Background

There is increasing interest in developing polymerization processes that can be predictably controlled to produce copolymers/polymers having specifically desired structures and predictable, narrow dispersity molecular weights. One of the means for achieving such results is through a process of living polymerization. Such a process provides a higher degree of control during the synthesis of polymers having predictably well-defined structures and properties as compared to polymers made by conventional polymerization processes.

Controlled radical polymerization processes such as RAFT (reversible addition fragmentation chain transfer) provide useful embodiments of living polymerization processes. RAFT processes using xanthate or dithiocarbamate chain transfer RAFT agents are disclosed in WO 99/31144. RAFT processes using dithioester or trithiocarbonate chain transfer agents are disclosed in WO 98/01478, WO 200500319, WO 2005000924 and WO 2005000923.

The polymers produced by RAFT processes have end groups derived from the chain transfer agents used in these processes. For RAFT-derived polymers using xanthate, dithiocarbamate, dithioester or trithiocarbonate chain transfer agents, each polymer chain will contain at least one end group comprising a xanthate, dithiocarbamate, dithioester or trithiocarbonate functional group. In some end-use applications of the RAFT-derived polymers, it may be desirable to remove these functional groups and replace them with hydrogen.

WO 02/090397 discloses a process for substituting a dithiocarbonylated or dithiophosphorylated function on the chain end of a living organic polymer with a hydrogen atom by contacting the polymer with a source of free radicals and an organic compound bearing a labile hydrogen atom.

WO2005000923, WO2005003192, WO2008/103144, US Patent No. 7,012,119, US Patent No. 6,988,439, and US Patent No. 7,807,755 disclose several methods for removing the sulfur-containing portion of a RAFT chain transfer agent from the polymer terminal end.

G. Moad et al. (Polym. Int. 2011; 60, 9-25), H. Willcock et al. (Polym. Chem., 2010, 1, 149-157) and A.O. Moughton et al. (Soft Matter, 2009, 5, 2361-2370) disclose replacing thiocarbonylthio end groups of RAFT polymers with hydrogen, using radical initiators and a hydrogen donor.

Yanjun Chen et al (J.App. Pol. Sci., 2013, 127, 1485-1492) describes an amphiphilic copolymer of acrylic acid (AA) and 2,2,2-trifluoroethyl methacrylate (TFEMA) synthesised by reversible addition-fragmentation transfer copolymerisation using a feed method of adding TFEMA.

In addition to the issue of the removal of the end-groups derived from RAFT polymerization as described herein, it has also been found that certain free acid monomers have an adverse affect on other monomers, having acid labile groups therein, during the overall RAFT polymerization process. The monomers having acid labile groups therein are referred herein as MALG (Monomers having Acid Labile Groups). The other free acid monomers (which interfere or affect the acid labile groups), are referred to herein as MNALG (Monomers Not having Acid Labile Groups). Thus, there is a need to protect those MALG monomers from the MNALG monomers during polymerization using RAFT chain transfer agents and also during end group removal. While some of the prior art (e.g. US 7,807,755 and US 7,696,292) has used a base material in polymerization processes, the problem as set forth herein has not been recognized, much less the solution provided therefor.

### SUMMARY

There is provided a polymerization process for the preparation of a polymer material in which one monomer is a free acid monomer, having the general formula CH₂=CR¹COOH, wherein R¹ is selected from the group consisting of F, C₁-C₅ alkyl, C₁-C₅ fluoroalkyl and hydrogen, and the other monomer or monomers have acid labile groups (for example acrylate or methacrylate monomers),being attached thereto and the polymerization is carried out using a chain transfer agent (RAFT) and a compatible first solvent, as detailed in the appended claims. The process comprises using a base material to prevent the degradation of the acid labile groups, and thereafter removing the base material from the copolymer material thus formed, said base material selected from the group consisting of alkali metal and alkaline earth metal carbonates, phosphates, hydroxides, amines and mixtures thereof.

### DETAILED DESCRIPTION

### Definition of terms

As used herein, a radical initiator is a substance that can produce radical species under mild conditions and promote radical reactions. Typical examples include peroxides, halogens and azo compounds.

A nitrogen base is a basic compound that contains nitrogen.

A random copolymer is a copolymer having macromolecular chains in which the probability of finding a given monomeric unit at any given site in the chain is independent of the nature of the adjacent units.

A block copolymer is a polymer having 2 or more differing homopolymer or copolymer segments attached to each other such that the end of one segment is attached to the beginning of the next.

A graft copolymer is a homopolymer or copolymer segment (backbone) to which are attached, at varying or uniform distances along its length, one or more homopolymer or copolymer segments (grafts) that may be different from or the same as the backbone.

A gradient copolymer is a copolymer of two or more monomers, where the chemical composition changes continuously and predictably along the polymer chain.

The term polymer and copolymer are sometimes used interchangeably herein.

RAFT and CTA are used interchangeably herein to designate the chain transfer agents.

The terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, "a" or "an" are employed to describe elements and components of the invention. This description should be read to include one, or at least one, and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. All publications, patent applications, patents, and other references mentioned herein are incorporated by reference in their entirety. In case of conflict, the present specification, including definitions, will control. In addition, the materials, methods, and examples are illustrative only and not intended to be limiting.

Many of the chain transfer agents (CTA) used in RAFT polymerization processes leave at least one sulfur-containing end-group on the RAFT-derived polymer. Typically, the sulfur-containing end-group has the structure -SC(S)X, where X is an alkyl, aryl, alkoxy, amine or alkylthio group. In some end-use applications of the RAFT polymer, the sulfur-containing end-group can be left in place. In other end-use applications, it is desirable to remove the sulfur-derived end-group and replace it with a hydrogen atom. Similarly, it may be desirable to remove sulfur-containing groups that are in the polymer backbone or sulfur-containing functional groups pendant from the main chain. These processes are known in the prior art as examplifed in US 7,807,755 and also described herein.The RAFT /CTA materials are known in the art as set forth herein. One of the preferred CTA is (S)-methyl 4-cyano-4-(dodecylthiocarbonothioylthio)pentanoate having the formula C20H35NO2S3, and which is sometimes referred to as RAFT 2.2.

The present invention, then, is directed to processes for protecting monomers (MALG) from monomers (MNALG) during the RAFT polymerization. Thereafter one or more groups of the formula -SC(S)X can be removed from a resultant polymer containing such groups.

More specifically, the overall process can comprise the steps of (1) providing an initiator, base material and solvent in a reactor; (2) preparing two feed solutions, respectively, one solution containing a monomer (MNALG) in solvent,and a second solution containing a monomer (MALG) in solvent, and then feeding them (after a base material is added to the reactor) into the reactor for polymerization; (3) a purification step wherein the resultant polymer is cooled and then fed into a second solvent which precipates the polymer from the first solvent; (4) removing some or optionally all the end group by dissolving the polymer solids in the first solvent in a reactor along with a base material and then feeding an end-group removal material into said reactor, heat to reflux to confirm end-group removal; (5) a second purification step which comprises cooling the reactor contents to room temperature and then adding a second solvent to precipitate the polymer solids and then drying the polymer; (6) a metal reduction step which comprises the dissolution of the polymer in a photoresist organic solvent (e.g. PGMEA) and contacting the resultant organic solution with a chelating agent (e.g. oxalic acid) in an aqueous solution which dissolves the metal (base material) therein, and separating the resultant layers and (7) concentrating the organic/solvent solution and then filtering and drying the polymer.

The base material (BM) is selected from the group consisting of alkali metal and alkaline earth metal carbonates, phosphates, hydroxides and the like. Other base materials which can be used are amines such as triethylamine (TEA). A preferred base material is sodium bicarbonate.

The free acid monomers, designated MNALG, are materials which can degrade the monomers, designated MALG, or interfere with the functionality thereof. These MNALG include acrylic acid and methacrylic acid. The free acid monomers have the general formula CH₂=CR¹COOH, and wherein R¹ is as defined below , and also includes hydrogen.

The monomers, designated MALG, can be an acrylic monomer of the form, CH₂=CR¹CO₂R², wherein R¹ is selected from the group consisting of F, C₁-C₅ alkyl, and C₁-C₅ fluoroalkyl; and R² is selected from the group consisting of C₁-C₂₀ acyclic alkyl, C₅-C₅₀ cyclic alkyl, and C₇-C₅₀ polycyclic alkyl. The term "(meth)acrylate" refers to both acrylate and methacrylate polymers. Similarly, the term "polymer" is inclusive of both homopolymers and copolymers.

Preferably R¹ is a C₁-C₅ alkyl group.

R² is generally an acid-labile group. In one embodiment, R² is a C₅-C₅₀ polycyclic group, preferably C₅-C₃₀, optionally with one or more hydroxyl substituents. R² can also be optionally substituted by one or more halogen, ether oxygen, ester or ketone carbonyl groups.

R² can be a functional group of the formula:

-C(R⁷)(R⁸)-[C(R⁹)(R¹⁰)]_{q}-C(R¹¹)(R¹²)-OH,

wherein q = 0, 1, 2, 3, 4 or 5;
R⁷ and R⁸ are independently selected from the group consisting of C₁―C₆ alkyl and C₁―C₆ alkyl substituted with an ether oxygen; or R⁷ and R⁸ taken together form a 3- to 8-membered ring, optionally substituted with an ether oxygen, provided that the carbon attached to R⁷ and R⁸ is not at a bridgehead position;
R⁹ and R¹⁰ are independently selected from the group consisting of H, C₁― C₆ alkyl, and C₁―C₆ alkyl substituted with an ether oxygen; or R⁹ and R¹⁰ taken together form a 3- to 8-membered ring, optionally substituted with an ether oxygen;
C₁―C₆ alkyl, and C₁―C₆ alkyl substituted with an ether oxygen; or R¹¹ and R¹² taken together form a 3- to 8-membered ring, optionally substituted with an ether oxygen; or
R⁷ and R¹¹ taken together with -[C(R⁹)(R¹⁰)]_{q}- form a 4- to 8-membered ring, provided that the carbon attached to R⁷ and R⁸ is not at a bridgehead position.

Acrylate and methacrylate monomers suitable for use in the invention include, but are not limited to: 2-methyl-2-adamantyl (meth)acrylate; 2-ethyl-2-adamantyl-(meth)acrylate; 2-propyl-2-adamantyl-(meth)acrylate; 2-(1-adamantyl)-2-propyl-(meth)acrylate; α-(γ-butyrolactone)-(meth)acrylate; a-(γ-butyrolactone)-(meth)acrylate; 3-hydroxy-1-adamantyl-(meth)acrylate; 8-methyltricyclo[5.2.1]decan-8-yl-(meth)acrylate; 8-ethyltricyclo[5.2.1]decan-8-yl-(meth)acrylate; 2-(4-methoxybutyl)-2-adamantyl-(meth)acrylate; mevalonic lactone-(meth)acrylate; PinAc; PinMAc; exo-3-(2,2-bis(trifluoromethyl)-2-hydroxyethyl)-endo-2-(2-methylpropenoyl)-bicyclo[2.2.1]heptane; exo-3-(2,2-bis(trifluoromethyl)-2-hydroxyethyl)-endo-2-(propenoyl)-bicyclo[2.2.1]heptane; 4-hydroxy-1-methylcyclohexyl-(meth)acrylate; 1-methylcyclopentyl-(meth)acrylate; 1-ethylcyclopentyl-(meth)acrylate; and 5-(meth)acryloyloxy-2,6-norbornanecarbolactone.

Preferred cyclic acrylic monomers include 3-hydroxy-1-adamantyl methacrylate (CH₂=C(CH₃)CO₂R², wherein R² is 3-hydroxy-1-adamantyl); 2-ethyl-2-adamantyl methacrylate; 1-ethylcyclopentyl-methacrylate (ECPMA); 2-methyl-2-adamantyl methacrylate (MAMA); 5-methacryloyloxy-2,6-norbornanecarbolactone (NBLMA); and γ-butyrolactone methacrylate, and both α- and β- isomers.

The MALG can also include fluorinated repeat units derived from monomers of the form CH₂=CR³CO₂R⁴, wherein R³ is selected from the group consisting of F, C₁-C₅ alkyl, and C₁-C₅ fluoroalkyl. R⁴ is selected from the group fluoroalkyls and fluoroethers consisting of -C(R⁵)(R⁶)(CH₂)ₚR_{f}, -C(R⁵)((CH₂)ₚR_{f})₂, -(CH₂)ₚR_{f}, and -(CH₂)ₚO(CH₂)ₚR_{f}, wherein p is an integer from 1 to 4; and R_{f} is C₂-C₁₄ perfluoroalkyl. R⁵ and R⁶ are independently selected from the group consisting of H, C₁-C₃ alkyl, or taken together form a 5- or 6-membered ring; note US 8,034,534.

In one embodiment, R³ is CH₃; R⁴ is -C(R⁵)(R⁶)(CH₂)ₚR_{f}, -(CH₂)ₚR_{f}, or -(CH₂)ₚO(CH₂)ₚR_{f}; R_{f} is C₄-C₁₀ straight chain perfluoroalkyl; and R⁵ and R⁶ are CH₃.

Suitable fluorinated repeat units include those derived from 1*H*,1*H*,2*H*,2*H*-perfluorohexyl (meth)acrylate, 1*H*,1*H*,2*H*,2*H*-perfluorooctyl methacrylate (C₆-ZFM) and 1,1-dimethyl-2*H*,2*H*,3*H*,3*H* -perfluorononyl methacrylate (FUDMA).

The MALG, thus, includes methacrylates and acrylates such as methyl (meth)acrylate, ethyl (meth)acrylate, propyl (meth)acrylate (all isomers), butyl (meth)acrylate (all isomers), 2-ethylhexyl (meth)acrylate, isobornyl (meth)acrylate, benzyl (meth)acrylate, phenyl (meth)acrylate, glycidyl (meth)acrylate, 2-hydroxyethyl (meth)acrylate, hydroxypropyl (meth)acrylate (all isomers), hydroxybutyl (meth)acrylate (all isomers), methyl alpha-hydroxy(meth)acrylate, ethyl alpha-hydroxy(meth)acrylate, butyl alpha-hydroxy(meth)acrylate, *N*,*N*-dimethylaminoethyl (meth)acrylate, *N*,*N*-diethylaminoethyl (meth)acrylate, triethyleneglycol (meth)acrylate, trimethoxysilylpropyl (meth)acrylate, triethoxysilylpropyl (meth)acrylate, tributoxysilyl propyl (meth)acrylate, dimethoxymethylsilylpropyl (meth)acrylate, diethoxymethylsilylpropyl(meth)acrylate, dibutoxymethylsilylpropyl (meth)acrylate, diisopropoxymethylsilylpropyl (meth)acrylate, dimethoxysilylpropyl (meth)acrylate, diethoxysilylpropyl (meth)acrylate, dibutoxysilylpropyl (meth)acrylate, and diisopropoxysilylpropyl (meth)acrylate; some preferred acrylate monomers are (1) MAA--methyl adamantyl acrylate, (2) MAMA--methyl adamantyl methacrylate, (3) EAA-ethyl adamantyl acrylate, (4) EAMA--ethyl adamantyl methacrylate, (5) ETCDA--ethyl tricyclodecanyl acrylate, (6) ETCDMA--ethyl tricyclodecanyl methacrylate, (7) PAMA--propyl adamantyl methacrylate, (8) MBAMA-methoxybutyl adamantyl methacrylate, (9) MBAA--methoxybutyl adamantyl acrylate, (10) isobornylacrylate, (11) isobornylmethacrylate, (12) cyclohexylacrylate, and (13) cyclohexylmethacrylate. Other preferred acrylate monomers which can be used are (14) 2-methyl-2-adamantyl methacrylate; (15) 2-ethyl-2-adamantyl methacrylate; (16) 3-hydroxy-1-adamantyl methacrylate; (17) 3-hydroxy-1-adamantyl acrylate; (18) 2-methyl-2-adamantyl acrylate; (19) 2-ethyl-2-adamantyl acrylate; (20) 2-hydroxy-1,1,2-trimethylpropyl acrylate; (21) 5-oxo-4-oxatricyclo-non-2-yl acrylate; (22) 2-hydroxy-1,1,2-trimethylprop- yl 2-methacrylate; (23) 2-methyl-1-adamantyl methacrylate; (24) 2-ethyl-1-adamantyl methacrylate; (25) 5-oxotetrahydrofuran-3-yl acrylate; (26) 3-hydroxy-1-adamantyl methylacrylate; (27) 5-oxotetrahydrofuran-3-yl 2-methylacrylate; (28) 5-oxo-4-oxatricyclo-non-- 2-yl 2 methylacrylate.

Additional acrylates and other monomers that may be used in the present invention with the MNALG and CTA to form various copolymers include the following materials: monodecyl maleate; 2-hydroxy ethyl methacrylate; isodecyl methacrylate; hydroxy propyl methacrylate; isobutyl methacrylate; lauryl methacrylate; hydroxy propyl acrylate; methyl acrylate; t-butylaminoethyl methacrylate; isocyanatoethyl methacrylate; tributyltin methacrylate; sulfoethyl methacrylate; butyl vinyl ether blocked methacrylic acid; t-butyl methacrylate; 2-phenoxy ethyl methacrylate; acetoacetoxyethyl methacrylate; 2-phenoxy ethyl acrylate; 2-ethoxy ethoxy ethyl acrylate; beta-carboxyethyl acrylate; maleic anhydride; isobornyl methacrylate; isobornyl acrylate; methyl methacrylate; ethyl acrylate; 2-ethyl hexyl methacrylate; 2-ethyl hexyl acrylate; glycidyl methacrylate; N-butyl acrylate; acrolein; 2-diethylaminoethyl methacrylate; allyl methacrylate; vinyl oxazoline ester of tall meso methacrylate; itaconic acid; N-butyl methacrylate; ethyl methacrylate; hydroxy ethyl acrylate; acrylamide oil; acrylonitrile; and stearyl methacrylate.

Suitable first solvents for use in the polymerization process of the present invention are capable of dissolving the monomer and resultant polymer at high solids loading, e.g., at 25-80 wt% based on the combined weight of the monomers and the first solvent, and the base material at loadings of .05-15 wt%, based on the combined weight of the polymer, the first solvent and the base material. The solvent should also be inert under the reaction conditions and not react with the monomer, polymer, the base material, the radical initiator, the radicals formed or any reaction byproducts.

Dissolving the polymer at such high solids loadings is facilitated by selecting a solvent that has a solubility parameter within two units (unit = δ(cal/cm³)^{1/2}) of the solubility parameter of the polymer. Solubility parameters of a wide variety of polymers and solvents have been published, or can be determined by well-established methods. Typically, hydrophobic polymers have solubility parameters in the range of 6-8, and hydrophilic polymers have solubility parameters greater than 12.

Suitable first solvents include acetone, acetonitrile, amyl acetate, butyl acetate, butyl alcohol, diethyl carbonate, di(ethylene glycol), di(ethylene glycol) monobutyl ether, di(ethylene glycol) monomethyl ether, diethyl ketone, DMAC (*N*,*N*-dimethylacetamide), *N*,*N*-dimethylformamide, dimethyl sulfoxide, 1,4-dioxane, ethyl acetate, ethylene carbonate, ethylene glycol, ethylene glycol diacetate, isopropyl alcohol, methyl amyl ketone, MPK (methyl propyl ketone), MEK (methyl ethyl ketone), propyl acetate, 1,2-propylenecarbonate,THF (tetrahydrofuran), PGME (propylene glycol methyl ether) and mixtures thereof. THF is the preferred first solvent.

The resultant polymer, for example, may typically comprise repeat units derived from monomers (MNALG and MALG) or can be from the group consisting of:
methacrylates and acrylates such as methyl (meth)acrylate, ethyl (meth)acrylate, propyl (meth)acrylate (all isomers), butyl (meth)acrylate (all isomers), 2-ethylhexyl (meth)acrylate, isobornyl (meth)acrylate, (meth)acrylic acid, benzyl (meth)acrylate, phenyl (meth)acrylate, glycidyl (meth)acrylate, 2-hydroxyethyl (meth)acrylate, hydroxypropyl (meth)acrylate (all isomers), hydroxybutyl (meth)acrylate (all isomers), methyl alpha-hydroxy(meth)acrylate, ethyl alpha-hydroxy(meth)acrylate, butyl alpha-hydroxy(meth)acrylate, *N*,*N*-dimethylaminoethyl (meth)acrylate, *N*,*N*-diethylaminoethyl (meth)acrylate, triethyleneglycol (meth)acrylate, trimethoxysilylpropyl (meth)acrylate, triethoxysilylpropyl (meth)acrylate, tributoxysilyl propyl (meth)acrylate, dimethoxymethylsilylpropyl (meth)acrylate, diethoxymethylsilylpropyl(meth)acrylate, dibutoxymethylsilylpropyl (meth)acrylate, diisopropoxymethylsilylpropyl (meth)acrylate, dimethoxysilylpropyl (meth)acrylate, diethoxysilylpropyl (meth)acrylate, dibutoxysilylpropyl (meth)acrylate, and diisopropoxysilylpropyl (meth)acrylate;
and , the above acrylate monomers, in combination with monomers such as(meth)acrylonitrile;styrenes such as styrene, acetoxystyrene, and substituted styrenes, wherein the substituent is selected from the group cosisting of alkyls, halogens, and halogen-substituted-alkyls,; itaconic anhydride;acrylamides and methacrylamides such as (meth)acrylamide, *N*-methylacrylamide, *N*,*N*-dimethylacrylamide, *N*-*tert*-butyl(meth)acrylamide, *N*-*n*-butyl(meth)acrylamide, *N*-methylol(meth)acrylamide, and *N*-ethylol(meth)acrylamide; *p*-vinylbenzene sulfonate sodium salt;
vinyl acetate, vinyl butyrate, vinyl benzoate, vinyl chloride, vinyl fluoride, and vinyl bromide; andmaleic anhydride, *N*-phenylmaleimide, *N-*butylmaleimide, *N*-vinylpyrrolidone, *N*-vinylcarbazole, butadiene, isoprene, chloroprene, ethylene and propylene.

In some embodiments, the polymer contains a polystyrene comprising repeat units selected from the group consisting of styrenes. In some embodiments, the polymer comprises repeat units selected from one or more of the groups of styrenes, acrylates and methacrylates.

Suitable radical initiators for use in the present invention include:
peroxides, such as diisononanoyl peroxide, didecanoyl peroxide, di(3-carboxypropionyl) peroxide, didodecanoyl peroxide, 2,5-dimethyl-2,5-di(2-ethylhexanoylperoxy)hexane, dicumyl peroxide, dibenzoyl peroxide, and dilauroyl peroxide; peroxyesters, such as 3-hydroxy-1,1-dimethylbutyl peroxyneodecanoate, a-cumylperoxyneodecanoate, 2-hydroxy-1,1-dimethylbutyl peroxyneoheptanoate, a-cumyl peroxyneoheptanoate, *t*-amyl peroxyneodecanoate, *t*-butyl peroxyneodecanoate, 3-hydroxy-1,1-dimethylbutylperoxy-2-ethylhexanoate, *t*-butyl peroxyacetate, *t*-butyl peroxybenzoate, *t*-butyl peroxyoctoate, *t*-butyl peroxyneodecanoate, *t*-butylperoxy isobutyrate, *t*-amyl peroxypivalate, *t*-butyl peroxypivalate, *t*-amylperoxy 2-ethylhexanoate, *t*-butylperoxy 2-ethylhexanoate, di(2-ethylhexyl) peroxydicarbonate, di(n-propyl) peroxydicarbonate, di(sec-butyl)peroxydicarbonate, di-isopropyl peroxydicarbonate, and dicyclohexyl peroxydicarbonate; azo compounds, such as 2,2'-azobis(isobutyronitrile), 2,2'-azobis(2-cyano-2-butane), dimethyl 2,2'-azobis(methyl isobutyrate), 4,4'-azobis(4-cyanopentanoic acid), 4,4'-azobis(4-cyanopentan-1-ol), 1,1'-azobis(cyclohexanecarbonitrile), 2-(*t*-butylazo)-2-cyanopropane, 2,2'-azobis[2-methyl-*N*-(1,1)-bis(hydroxymethyl)-2-hydroxyethyl] propionamide, 2,2'-azobis[2-methyl-*N*-hydroxyethyl)]-propionamide, 2,2'-azobis(*N*,*N*'-dimethyleneisobutyramidine dihydrochloride, 2,2'-azobis(2-amidinopropane) dihydrochloride, 2,2'-azobis(*N*,*N'*-dimethyleneisobutyramine), 2,2'-azobis(2-methyl-*N*-[1,1-bis(hydroxymethyl)-2-hydroxyethyl] propionamide), 2,2'-azobis(2-methyl-*N*-[1,1-bis(hydroxymethyl) ethyl] propionamide, 2,2'-azobis[2-methyl-*N*-(2-hydroxyethyl) propionamide], 2,2'-azobis(isobutyramide) dihydrate, 2,2'-azobis(2,2,4-trimethylpentane), and 2,2'-azobis(2-methylpropane); peroxydisulfates, such as potassium peroxydisulfate and ammonium peroxydisulfate; and hyponitrites, such as di-*t*-butyl hyponitrite and dicumyl hyponitrite.

In some embodiments, the initiator is selected from the group consisting of dicumyl peroxide, dibenzoyl peroxide, dilauroyl peroxide, *t*-butyl peroxyoctoate, and *t*-butyl peroxyneodecanoate.

In the processes of some embodiments of this invention, a homogeneous solution is prepared comprising a first solvent, a base material and 25-80 wt% of both MNALG and MALG monomers, wherein the wt% of monomers is based on the combined weight of the monomers and the first solvent. In the homogeneous solution, both the base material and the monomers are essentially completely dissolved, i.e., less than 2 wt% of either component remains in a separate phase. The homogeneous solution also comprises a low concentration of radicals derived from a radical initiator. There are several methods to establish a suitable concentration of radicals, and representative methods are described below.

Typically, the preparation of the homogeneous solution and the subsequent polymerization is conducted in an inert atmosphere (e.g., under N₂, argon, or other suitable gas that is inert under the reaction conditions).

In some embodiments, the MNALG monomer and initiator are dissolved in the first solvent and polymerized to form a polymer before the addition of the MALG monomer, base material and initiator (in a similar solvent, a second solution) is added to the first solution. Typically, the polymer is heated in the first solvent to facilitate dissolution. Suitable heating temperatures include about 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, 130 °C, or any range between two such temperatures, e.g., 50-80 °C, 50-115 °C, 90-115 °C, or 80-120 °C.

Also, the temperatures used at the time of the addition is 40-80 °C, or 40-70 °C, or 40-60 °C, or 40-50 °C.

In some embodiments, the polymer comprises 25-80 wt%, 30-80 wt%, 50-80 wt%, 60-75 wt%, or 70-80 wt% of the homogeneous solution, wherein the wt% polymer is based on the combined weight of the polymer and the first solvent.

Stirring or other forms of mixing (agitation) facilitate the formation of the solutions described herein.

In addition to the polymer, the first solvent and initiator, all in solution, the solution also comprises a low concentration of radicals derived from a radical initiator. The radical initiator is typically dissolved in or mixed with a second solvent before being added to the first solution along with a second feed stream comprising the MALG; the base material is fed into the reactor before the addition of the MALG and additional initiator. Typically, the second solvent used is the same as the first solvent, i.e., the solvent used to dissolve the polymer.

The molar ratio of radical initiator to sulfur-containing functional groups is typically less than 1:1, for example, 1:1-30 (that is, 1:1 or 1:30, or any value in between), or 1:2-20, or 1:5-15.

The amount of second solvent used to form the radical initiator solution is not critical, but 2-20 wt% solutions are typical.

In some embodiments where the individual monomers (MNALG and MALG) are heat sensitive at low temperatures, the solution of the radical initiator and MALG are added to a solution of the polymer (formed from the polymerization of the MNALG monomer) in the reactor continuously or in small portions, typically over a period of several hours, so as to maintain a low, but nearly constant, flux in the solution. The optimal time period for addition depends primarily on the temperature of the solution and the half-life of the radical initiator at that temperature. Where the monomers are not heat sensitive at low temperatures, then the individual monomers (MNALG and MALG) in solution are added to the reactor simultaneously and polymerization is conducted.

Typically, the rate of addition is such that the time period for the addition of the radical initiator solution and MALG is at least 3 half-lives of the radical initiator at the reaction temperature. For example, Luperox®26 has a half-life of 1 hour at 94.6 °C, so a solution of this radical initiator and MALG are added to the solution of polymer and base material over a period of at least 5 hours. In some embodiments, the time period of addition is 3-30, or 5-20, or 10-15 half-lives of the initiator at the reaction temperature.

Computer programs (e.g., MATLAB™) are also available that can predict the radical concentration and help guide the choice of the rate of individual monomer (MNALG and MALG) solutions and radical initiator addition. Such computer programs can also be used to estimate the concentration of radicals in the homogeneous solution.

In some embodiments, the radical initiator and MALG are added to a solution of the polymer (from MNALG monomer)and the base material discontinuously, e.g., in one portion or in many portions. In this embodiment, the radical initiator typically has a long half-life at the reaction temperature, e.g., more than 20 or 10 or 5 or 2 hours at the reaction temperature of the solution.

In some embodiments, the solution of the polymer and base material are heated before the addition of the radical initiator and MALG. In some embodiments, the addition of the radical initiator and MALG commences before the desired reaction temperature has been reached.

Suitable heating temperatures include about 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, 130 °C, or any range between two such temperatures, e.g., 50-80 °C, 50-115 °C, 90-115 °C, or 80-120 °C.

The progress of the reaction can be monitored, for example, by uv-vis spectra, e.g., the absorbance at 312 nm.

In one embodiment, after the reaction is complete as described above, the reactor contents are cooled to room temperature. The polymer is then precipitated in the reactor by the addition, with rapid stirring, of a organic solvent (e.g. heptane) under a nitrogen atmosphere. The reactor contents are stirred for 1 hour or more, then stopped, allowing the polymer solids to settle. In order to continue the purification process, the liquid layer is removed from solids and fresh organic solvent (e.g. heptane) is added back to the reactor. The reactor is then stirred for 1 hour or more, then stopped, thus allowing the solids to settle. This is repeated with the liquid removal and fresh organic solvent/heptane addition until residual monomer content is <0.1 wt% by LC. After final liquid removal, the polymer solids are dried until heptane level is <20 wt%.

In one embodiment, the end-group removal step is carried out by dissolving the polymer solids in the first solvent (e.g. THF) and added to the reactor. At this point, base material is added to the reactor and the contents thereof are heated to reflux temperature. When reflux temperature is achieved, an end-group removal material-EGRM (e.g. lauroyl peroxide) is added. The mole ratio of EGRM to the CTA is about 1:1 to about 3:1, preferably about 2:1. The contents of the reactor is then again heated to refux temperature for a period of about 1 to 5 hours, generally about 2-4 hours. A sample is taken from the reactor to determine the end-group removal via UV-vis confirmation. To minimize degradation of the polymer after end-group removal, it may be desirable to monitor the progress of the reaction and reduce the temperature when the desired reduction in sulfur-containing end groups has been achieved. Essentially complete (e.g., >99.9%) removal is readily achieved.

In one embodiment, a second purification step is carried out similar to that described above. After the reaction is complete as described above, the reactor contents are cooled to room temperature. The polymer is then precipitated in the reactor by the addition, with rapidly stirring, of a second or organic solvent (e.g. heptane) under a nitrogen atmosphere. The reactor contents are stirred for 1 hour or more, then stopped, allowing the polymer solids to settle. In order to continue the purification process, the liquid layer is removed from solids and fresh organic solvent (e.g. heptane) is added back to the reactor. The reactor is then stirred for 1 hour or more, then stop, thus allowing the solids to settle. This is repeated with the liquid removal and fresh organic solvent/heptane addition until residual monomer content is <0.1 wt% by LC. After final liquid removal, the polymer solids are dried until heptane level is <20 wt%. The second or organic solvent is selected from the group consisting of hexane, heptane, octane, (or their mixed isomers ); petroleum ether, ligroin, lower alkyl halohydrocarbons, methylene chloride, and mixtures thereof.

In one embodiment, the next step in the overall process is the removal of any base material (BM) (e.g. sodium metal-containing material). The polymer solids are dissolved in a compatable photoresist solvent/material (CPS) (e.g. PGMEA) to make about a 1 to 30 percent by weight solution. This can be carried out in any type reactor/container. The polymer/PGMEA solution in the reactor is then contacted with a sequestering agent (SA) (e.g. oxalic acid, succinic acid, fumaric acid, maleic acid, malonic acid and adipic acid) by injecting the SA into the reactor and agitating/stirring continuously for a period of from about 15 minutes to about 3 hours. The SA is preferably in deionized (DI) waterand the SA content is about 0.01 to about 0.10 weight percent of the DI water. The polymer to DI water mole ratio is about 0.01 to about 0.10. After the agitation period, the layers are allowed to separate and the bottom DI water layer is removed. This treatment of the polymer solution with DI water/SA is repeated at least once more, preferably 2-5 times to insure the BM is removed.This repeat is made until the SA is not detected by IC or LC analysis < lower than about 3 ppm concentration). This procedure is exemplified in US 6,777,511 and US 6,239,231.

The above-mentioned photoresist solvents (CPS) include, for example, ethers, esters, ether-esters, ketones, ketone-esters, amides, amidoesters, lactams, lactones, (halogenated) hydrocarbons and, more specifically, ethylene glycol monoalkyl ethers, diethylene glycol dialkyl ethers, propylene glycol monoalkyl ethers, propylene glycol dialkyl ethers, acetic acid esters, hydroxy acetic acid esters, lactic acid esters, ethylene glycol monoalkyl ether acetates, propylene glycol monoalkyl ether acetates, alkoxyacetic acid esters, (non) cyclic ketones, acetoacetic acid esters, piruvic acid esters, propionic acid esters, **N,N**-dialkyl formamides, **N,N**-dialkyl acetoamides, **N**-alkyl pyrrolidones, .gamma.-lactones, (halogenated) aliphatic hydrocarbons, (halogenated) aromatic hydrocarbons, and the like can be mentioned.

Specific examples of such a solvent (CPS) include ethylene glycol monomethyl ether, ethylene glycol monoethyl ether, ethylene glycol monopropyl ether, ethylene glycol monobutyl ether, diethylene glycol dimethyl ether, diethylene glycol diethyl ether, diethylene glycol dipropyl ether, diethylene glycol dibutyl ether, methyl cellosolve acetate, ethyl cellosolve acetate, propylene glycol monomethyl ether acetate, propylene glycol monoethyl ether acetate (PGMEA), propylene glycol monopropyl ether acetate, isopropenyl acetate, isopropenyl propionate, toluene, xylene, methyl ethyl ketone, cyclohexanone, 2-heptanone, 3-heptanone, 4-heptanone, ethyl 2-hydroxypropionate, ethyl 2-hydroxy-2-methylpropionate, ethyl ethoxyacetate, ethyl hydoxyacetate, methyl 2-hydroxy-3-methyl butyrate, 3-methoxybutyl acetate, 3-methyl-3-methoxybutyl acetate, 3-methyl-3-methoxybutyl propionate, 3-methyl-3-methoxybutyl butyrate, ethyl acetate, propyl acetate, butyl acetate, methyl acetoacetate, ethyl acetoacetate, methyl 3-methoxypropionate, ethyl 3-methoxypropionate, methyl 3-ethoxypropionate, ethyl 3-ethoxypropionate, **N**-methylpyrrolidone, **N,N**-dimethylformamide, **N,N**-dimethyl acetoamide, and the like.

Among the solvents mentioned above, 2-hydroxypropionic acid esters, 3-alkoxypropionic acid esters, propylene glycol monoalkyl ether acetates, and the like are preferred.

The final step, the concentration of the polymer in the CPM, can be conducted via vacuum distillation at about 40 °C to about 60 °C. If the polymer is to be used as such, then no further steps are required. But if the polymer is to be shipped, then the polymer can be filtered, dried and thus stored.

In the case of the examples below, the solution typically turns colorless and the absorbance peak at 312 nm disappears as the CTA or trithiocarbonate end groups are removed, as the reaction solution is measured by UV-Vis spectroscopy.

In some embodiments, the solution is heated for at least 0.2 or 1 or 2 or 5 or 10 hours, depending on the half-life of the initiator and the reaction rate at the reaction temperature of the solution.

The polymer product produced by a process of this invention can be isolated by standard polymer isolation techniques, e.g., precipitation, chromatography, or extraction.

The polymers produced by the processes described herein are useful in many applications in which polymers of low polydispersity and compositional or architectural control are desired, e.g., photoresists, dispersants, and medical applications. The absence of high molecular weight, coupled products allows these polymers to be used in applications in which molecular weight uniformity is critical.

### EXAMPLES

The following examples illustrate certain features and advantages of the present invention. They are intended to be illustrative of the invention, but not limiting. All percentages are by weight, unless otherwise indicated.

### Definition of Chemicals and Monomers used (Commercial source)

- Luperox®26: tert-butylperoxy-2-ethylhexanoate, Arkema, Inc. (King of Prussia, PA).
- Vazo® 88: 1,1'-azobis(cyanocyclohexane) E. I. du Pont de Nemours and Company
- V-601: dimethyl 2,2'-azobis(2-methylpropionate) Wako Chemicals USA, Inc., Richmond, VA.
- MPK: methyl propyl ketone
- PGMEA: propylene glycol methyl ether acetate Aldrich Chemical Co., Milwaukee, WI
- MEK: Methyl ethyl ketone Aldrich Chemical Co., Milwaukee, WI
- THF: Tetrahydrofuran Aldrich Chemical Co., Milwaukee, WI

### Preparation of Trithiocarbonate RAFT Agent (RAFT 2.2), C₁₂H₂₅SC(S)SC(CH₃)(CN)CH₂CH₂CO₂CH₃

### Step 1: Preparation of Bis(dodecylsulfanylthiocarbonyl) Disulfide

A 2000 mL, 4-neck round bottom flask (fitted with mechanical stirrer, septum, thermocouple well, and reflux condenser with N₂ bubbler) was charged with heptane (1000 mL) and a solution of potassium t-butoxide in tetrahydrofuran (174.4 g, containing 34.7 g potassium t-butoxide, 0.31 mol). The resulting solution was cooled to ca. 5 °C and reacted with dodecanethiol (60.6 g, 0.30 mol, Sigma-Aldrich Co., Milwaukee, WI). The resulting white slurry was stirred for 30 min at 5-10 °C and then reacted with carbon disulfide (23.5 g, 0.31 mol) over 20 min. The mixture was stirred at 5 °C for 10 min, allowed to warm to 20-23 °C and stirred for 4 hours. The resulting yellow slurry was reacted in portions with iodine (40.0 g, 0.158 mol) over 40 min at 16-18 °C. The mixture was stirred at room temperature for 15 hours. Distilled water was added, and the separated organic phase was washed with a solution of sodium chloride and sodium thiosulfate, then with a sodium chloride solution. The organic layer was dried and the solvent was evaporated to provide 84.2 g (98%) of yellow solid.

### Step 2: Preparation of 4-Cyano-4-(dodecylsulfanythiocarbonyl)sulfanyl Pentanoic Acid

A 2 L, 3-neck flask fitted with reflux condenser, solids addition port, thermowell, and stir bar was charged with bis(dodecylsulfanylthiocarbonyl) disulfide (84.1 g, 151.6 mmol) and 760 mL ethyl acetate. The resulting solution was heated to gentle reflux and reacted with 4,4'-azobis(4-cyanopentanoic acid) (72.1 g, 257 mmol) (Wako Chemicals USA, Inc., Richmond, VA) over 3.75 h. The solution was heated for an additional 16 h.

Ethyl acetate was removed under reduced pressure and the product was allowed to crystallize from heptane. The solid was filtered, washed with water, and dried to provide 110.0 g (91%).

### Step 3: Preparation of Methyl 4-Cvano-4-(dodecylsulfanythiocarbonyl)sulfanyl Pentanoate

A solution of 4-cyano-4-(dodecylsulfanythiocarbonyl)sulfanyl pentanoic acid (C₁₂H₂₅SC(S)SC(Me)(CN)CH₂CH₂CO₂H, 64.8 g, 160.5 mmol) in THF (195 mL) at 5-10 °C was treated with diazabicyclo[5.4.0]undec-7-ene (26.9 g, 176.6 mmol). The mixture was stirred for 5 min, then treated with methyl iodide (25.9 g, 182 mmol), and the resulting mixture was stirred for 18 h.

The solution was diluted with heptane, filtered, and the solid was rinsed with heptane. The filtrate was washed successively with dilute sodium chloride, 1N hydrochloric acid, dilute sodium bicarbonate solution, and water. The dried organic phase was evaporated to give 64.13 g (96%) of amber oil.

### Characterization Methods

Size exclusion chromatography with the triple detection method was carried out using an SEC system Model Alliance 2690™ from Waters Corporation (Milford, MA), with a Waters 410™ refractive index detector (DRI) and Viscotek Corporation (Houston, TX) Model T-60A™ dual detector module incorporating static right angle light scattering and differential capillary viscometer detectors. Data reduction, incorporating data from all three detectors (refractometer, viscometer and light scattering photometer (right angle)), was performed with Trisec® GPC version 3.0 by Viscotek. The Flory-Fox equation was used for angular asymmetry light scattering correction. All chromatographic columns were obtained from Polymer Laboratories (Church Stretton, UK): two PL Gel Mixed C linear columns and one PL Gel 500A column to improve resolution at the low molecular weight region of a polymer distribution. The mobile phase was THF, stabilized with 0.05% BHT from J.T. Baker, Phillipsburg, N.J.

### Example 1

### Methacrylic acid-Methacrylate Polymer via RAFT Polymerization

A 2 L, 4-necked flask fitted with two addition funnels, condenser, and N₂ inlet, a thermocouple, and an overhead stirrer assembly was charged with trithiocarbonate RAFT agent C₁₂H₂₅SC(S)SC(CH₃)(CN)CH₂CH₂CO₂CH₃ (3.59 g, 8.61 mmol) and THF (35 mL). Initiator (V-601, FW = 230.26, 200 mg, 0.87 mmol; [RAFT]/[initiator] = 10) was added.

Sodium bicarbonate (31 g. ) was added to the reactor and the reactor contents stirred; the reaction vessel was purged with N₂ for 20 min. Two separate feed solutions were prepared. The first solution was methylacrylic acid (100 g. in 40 mL THF). The second solution was 1-ethylcyclooctyl-1 methacrylate (100 g, in 40 mL THF). These solutions were then metered into the reactor continuously over a three hour period and the reactor was heated to and maintained at 68 °C for a period of 20 hours after the start of the feeds.

After 2 hrs from the start of the feeding, another 50 mg of V-601 in 3 mL THF was added by syringe through the addition funnel port. Heating was continued for an additional 18 hrs and then cooled to room temperature.

After the 20 hr period, the reactor contents were cooled to room temperature (20 °C). Heptane (200 mL) was added to the reactor with rapid stirring under a nitrogen atmosphere. The stirring was continued for 1 hr with the polymer precipitating to the bottom of the reactor. The stirring was stopped thus allowing the precipitate to finally settle to the bottom-most portion of the reactor. The liquid layer was removed from polymer solids and fresh heptane (100 mL) was added back to the reactor. Stirring was continued for 1 hr and then stopped, allowing the polymer solids to settle to the bottom of the reactor. This step of heptane addition/removal was repeated until the monomer content was <0.1 wt% by LC. After the final liquid removal, the polymer powder was dried until the heptane level was <20 wt%.

The dried polymer solids were dissolved in THF (25 to 30 wt% solids) and then added to the reactor. Sodium bicarbonate (45 g.) was added to reactor and the contents thereof were heated to reflux. Lauroyl peroxide (6.86 g. [initiator]/[RAFT] = 2) was added to the reactor and again the overall contents were heated to reflux for 3 hrs; a reactor sample was obtained for UV-VIS confirmation of end group removal.

The reactor contents were cooled to room temperature (20 °C).

Heptane (200 mL) was added to the reactor with rapid stirring under a nitrogen atmosphere. The stirring was continued for 1 hr with the polymer precipitating to the bottom of the reactor. The stirring was stopped thus allowing the precipitate to finally settle to the bottom-most portion of the reactor. The liquid layer was removed from polymer solids and fresh heptane (100 mL) was added back to the reactor. Stirring was continued for 1 hr and then stopped, allowing the polymer solids to settle to the bottom of the reactor. This step of heptane addition/removal was repeated until the monomer content was <0.1 wt% by LC. After the final liquid removal, the polymer powder was dried until the heptane level was <20 wt%.

The polymer solids were then dissolved in PGMEA to make a 20 wt% solution. The 20 wt % solution was treated (in the reactor) with oxalic acid in DI water (polymer to DI water ratio was 0.02, oxalic acid was 0.05 wt% of DI water). The contents of the reactor were vigorously stirred for 1 hr then the resultant two layers were allowed to separate upon standing. The bottom (aqueous) layer was removed from the reactor and then a second oxalic acid treatment (with same volume of DI water but half the oxalic acid loading) was conducted. The reactor contents were stirred vigorously for 1 hr and the two layers were allowed to separate upon standing. The bottom (aqueous) layer was removed and PGMEA was added back to the original volume of the 20 wt% solution. Additional fresh DI water was added to the reactor and the contents stirred for 1 hr. This latter step (PGMEA/water addition/removal) was repeated until no oxalic acid was detected by IC or LC analysis.

The 20 wt% solution was concentrated by vacuum distillation of PGMEA (<50 °C) and the polymer material was filtered at room temperature (20°C).

¹³C NMR showed conversion was 81%.

### COMPARATIVE EXAMPLES

The following comparative examples are set forth to demonstrate that the inventive process would not work on those chemicals that did not process the chemical characteristics of the materials called for in the novel processes outlined above.

### COMPARATIVE EXAMPLE 1

Preparation of Triethylammonium Salt of RAFTv2.0

C₁₂H₂₅SC(S)SC(CH₃)(CN)CH₂CH₂CO₂ (CH₃CH₂)₃NH

C₁₂H₂₅SC(S)SC(CH₃)(CN)CH₂CH₂CO₂H (RAFT) + (CH₃CH₂)₃N (TEA)

| | |
|---|---|
| FW = 403.66 | 101.19 |
| 1.21 g | 0.304 g |
| 3.0 mmol | 3.0 mmol |

A solution of the above RAFT agent in THF (5 mL) was treated with triethylamine. The mixture was stirred for 5-10 min, then solvent was removed under vacuum to give 1.47 g of viscous oil. ¹H NMR was recorded in CDCl₃: 3.29 (t, a=4.41), 3.04 (q, a=7.55), 2.54- 2.28 (overlapping m's, CH₂ adjacent to acid group is shifted, a=8.95), 1.86 (s, CH₃), 1.66 (m), 1.39- 1.17 (overlapping signals), 0.85 (t, a=6.65). Longer delay time (2 min) and single-pulse spectra also showed insufficient area for Et₃NH component. Thus, either weighing error, or equilibrium is reversed by application of vacuum. All of crude product was used in the polymerization step, but additional Et₃N (0.15 g) was added to the run prior to starting.

### COMPARATIVE EXAMPLE 2

Same method as set forth above in Comparative Example 1, but with monomer changes 70/30/30 precharge/feed are used.
**Terpolymer of MAMA/b-GBLMA/HAdMA**
**Target composition = 50/30/20; M_{w} = 10,000**

| | |
|---|---|
| MAMA (10% excess used) | FW=234.34; wt = 23.2 g, 99.0 mmol (total) |
| b-GBLMA | FW=170.17; wt = 9.19 g, 54.0 mmol (total) |
| HAdMA | FW=236.31; wt = 8.51 g, 36.0 mmol (total) |
| | Total weight = 42.04 incl. RAFTv2.0 |

GBLMA refers to γ-butyrolactone methacrylate and HAdMA refers to 3-hydroxy-1-adamantyl methacrylate.

A 3-neck flask fitted with addition funnel and nitrogen gas inlet with adaptor to vacuum for de-gassing the reaction mixture before kick-off, thermowell, and stir-bar was charged with trithiocarbonate RAFT agent C₁₂H₂₅SC(S)SC(CH₃)(CN)CH₂CH₂CO₂ Et₃NH (E105128-121; FW = 504.85; 1.39 g, = 2.75 mmol), propylene glycol methyl ether acetate (40 mL), monomer pre-charge, consisting of MAMA = 16.24 g, b-GBLMA = 2.76 g, and HADMA = 2.55 g, and Vazo 88 (207 mg, 0.85 mmol). Remaining portions of monomers, consisting of MAMA = 6.96 g, b-GBLMA = 6.43 g, HADMA = 5.96 g in PGMEA (70 mL) was charged to the addition funnel. The reactor was filled with nitrogen, and two more evacuation/fill cycles were performed. The temperature was increased (staged, but roughly linear ramp) to 90°C over a 1.0 hr time interval. Temperature was maintained at 90°C for 1.0 hr, then the monomer feed was started and continued over a 6 hr time period. The reaction was maintained at 90°C for 21 hr.

The solution was cooled to room temperature and added to heptane (1200 mL) dropwise with rapid stirring. Polymer was collected by filtration.

¹H NMR (CDCl₃) results: No b-GBLMA remained in the filtrate. Instead, significant amount of a new component was observed. This was identified as furanone, 4.92 (dd, J ca. 1.96, a=2.0), 6.19 (dt, J_{d} = 5.87, Jₜ = 2.25), 7.59 (dt, J_{d} =5.87), Jₜ = 1.76).

Product was dissolved in THF (140mL, 5 mL as solution rinse), filtered through glass fiber disk, and re-precipitated in methanol (1800 mL). After stirring for ¾ hr, the mixture was filtered and air-dried, then vacuum-oven dried at 70°C (N₂ purge).. Dried wt = 29.6 g.

SEC (THF, RI detector, polystyrene standards) showed: Mw = 10,500; Mn = 5,190; Mw/Mn = 2.02. It should be noted that use of triethylammonium salt leads to total decomp. of b-GBLMA and poor polydispersity. Excessive chain transfer from NCH₂- groups may be involved, in view of low value for Mn.

Composition by ¹³C NMR: MAMA/bGBLMA/HADMA/MAA = 49.2/0/23.9/26.9.

The above comparative examples vividly illustrate the difficulty of practicing the present invention when the correct criteria are not used as demonstrated by Example 1 set forth above.

## Claims

1. A polymerization process for the preparation of a polymer material in which one monomer is a free acid monomer, having the general formula CH₂=CR¹COOH, wherein R¹ is selected from the group consisting of F, C₁-C₅ alkyl, C₁-C₅ fluoroalkyl and hydrogen, and the other monomer or monomers have acid labile groups being attached thereto and the polymerization is carried out using a chain transfer agent (RAFT) and a compatible first solvent, wherein the process comprises using a base material to prevent the degradation of the acid labile groups, and thereafter removing the base material from the copolymer material thus formed, said base material selected from the group consisting of alkali metal and alkaline earth metal carbonates, phosphates, hydroxides, amines and mixtures thereof.

2. The process as set forth in claim 1, wherein the base material is removed from the polymer material by contacting the polymer material in said first solvent with a second solvent and thus precipitating the polymer therefrom, filtering said first solvent and the precipitated polymer to form a polymer cake, washing said precipitated polymer cake with additional portions of said second solvent, and drying said copolymer cake.

3. The process as set forth in claim 2 wherein (a) the said dried polymer is contacted with a photoresist compatible third solvent and said polymer is dissolved therein, and (b) the resultant solution is contacted with an aqueous acidic solution in order to remove the base material from the copolymer solution, thus preparing a substantially pure copolymer.

4. The process as set forth in any of claims 1 to 3 wherein the first solvent is selected from the group consisting of acetone, acetonitrile, amyl acetate, butyl acetate, butyl alcohol, diethyl carbonate, di(ethylene glycol), di(ethylene glycol) monobutyl ether, di(ethylene glycol) monomethyl ether, diethyl ketone, DMAC (N,N-dimethylacetamide), *N*,*N*-dimethylformamide, dimethyl sulfoxide, 1,4-dioxane, ethyl acetate, ethylene carbonate, ethylene glycol, ethylene glycol diacetate, isopropyl alcohol, methyl amyl ketone, MPK (methyl propyl ketone), MEK (methyl ethyl ketone), propyl acetate, 1,2-propylenecarbonate,THF (tetrahydrofuran), PGME (propyleneglycol monomethyl ether) and mixtures thereof.

5. The process as set forth in claim 2 wherein the second solvent is selected from the group consisting of hexane, heptane, octane or their mixed isomers; ethers, ligroin, lower alkyl halohydrocarbons, methylene chloride, methanol, isopropylethanol,and mixtures thereof, and wherein the mixture thereof results in a polymer produced which is substantially insoluble therein.

6. The process as set forth in claim 1 wherein the first monomer is a free acid monomer selected from the group consisting of acrylic acid, methacrylic acid and mixtures thereof, and the second monomer is a fluorinated monomer.

7. The process as set forth in claim 1, wherein said process comprises the steps of:
(1) providing an initiator, base material and solvent in a reactor;
(2) preparing two feed solutions, one solution containing said free acid monomer in a solvent, and a second solution containing said monomer or monomers having acid labile groups attached thereto, and then feeding them into the reactor for polymerisation;
(3) a purification step wherein the resultant polymer is cooled and then fed into a second solvent which precipitates the polymer from the first solvent;
(4) removing some or optionally all the end groups by dissolving the polymer solids in the first solvent in a reactor along with a base material and then feeding an end-group removal material into said reactor, and heating to reflux to confirm end-group removal;
(5) a second purification step which comprises cooling the reactor contents to room temperature and then adding a second solvent to precipitate the polymer solids and then drying the polymer;
(6) a metal reduction step which comprises the dissolution of the polymer in a photoresist organic solvent and contacting the resultant organic solution with a chelating agent in an aqueous solution which dissolves the base material therein, and separating the layers; and
(7) concentrating the organic/solvent solution and then filtering and drying the polymer.

8. The process as set forth in any of claims 1 to 7, comprising a radical initiator selected from diisononanoyl peroxide, didecanoyl peroxide, di(3-carboxypropionyl) peroxide, didodecanoyl peroxide, 2,5-dimethyl-2,5-di(2-ethylhexanoylperoxy)hexane, dicumyl peroxide, dibenzoyl peroxide, and dilauroyl peroxide; peroxyesters, such as 3-hydroxy-1,1-dimethylbutyl peroxyneodecanoate, a-cumylperoxyneodecanoate, 2-hydroxy-1,1-dimethylbutyl peroxyneoheptanoate, a-cumyl peroxyneoheptanoate, t-amyl peroxyneodecanoate, *t*-butyl peroxyneodecanoate, 3-hydroxy-1,1-dimethylbutylperoxy-2-ethylhexanoate, *t*-butyl peroxyacetate, *t*-butyl peroxybenzoate, *t*-butyl peroxyoctoate, *t*-butylperoxy isobutyrate, *t*-amyl peroxypivalate, *t*-butyl peroxypivalate, *t*-amylperoxy 2-ethylhexanoate, *t*-butylperoxy 2-ethylhexanoate, di(2-ethylhexyl) peroxydicarbonate, di(*n*-propyl) peroxydicarbonate, di(*sec*-butyl)peroxydicarbonate, di-isopropyl peroxydicarbonate, and dicyclohexyl peroxydicarbonate; azo compounds, such as 2,2'-azobis(isobutyronitrile), 2,2'-azobis(2-cyano-2-butane), dimethyl 2,2'-azobis(methyl isobutyrate), 4,4'-azobis(4-cyanopentanoic acid), 4,4'-azobis(4-cyanopentan-1-ol), 1,1'-azobis(cyclohexanecarbonitrile), 2-(*t*-butylazo)-2-cyanopropane, 2,2'-azobis[2-methyl-*N*-(1,1)-bis(hydroxymethyl)-2-hydroxyethyl] propionamide, 2,2'-azobis[2-methyl-*N*-hydroxyethyl)]-propionamide, 2,2'-azobis(*N*,*N*'-dimethyleneisobutyramidine dihydrochloride, 2,2'-azobis(2-amidinopropane) dihydrochloride, 2,2'-azobis(*N*,*N*'-dimethyleneisobutyramine), 2,2'-azobis(2-methyl-*N*-[1,1-bis(hydroxymethyl)-2-hydroxyethyl] propionamide), 2,2'-azobis(2-methyl-*N*-[1,1-bis(hydroxymethyl) ethyl] propionamide, 2,2'-azobis[2-methyl-*N*-(2-hydroxyethyl) propionamide], 2,2'-azobis(isobutyramide) dihydrate, 2,2'-azobis(2,2,4-trimethylpentane), and 2,2'-azobis(2-methylpropane); peroxydisulfates, such as potassium peroxydisulfate and ammonium peroxydisulfate; and hyponitrites, such as di-*t*-butyl hyponitrite and dicumyl hyponitrite.

9. The process as set forth in claim 7 or 8, wherein said initiator is selected from the group consisting of dicumyl peroxide, dibenzoyl peroxide, dilauroyl peroxide, *t*-butyl peroxyoctoate, and *t*-butyl peroxyneodecanoate.

## Patentansprüche

1. Polymerisationsverfahren für die Herstellung eines Polymermaterials, in dem ein Monomer ein Monomer einer freien Säure ist, das die allgemeine Formel CH₂ = CR¹COOH aufweist, wobei R¹ aus der Gruppe ausgewählt wird bestehend aus F, C₁-C₅-Alkyl, C₁-C₅-Fluoralkyl und Wasserstoff, und das andere Monomer oder die anderen Monomere säurelabile Gruppen aufweisen, die daran angelagert sind, und die Polymerisation unter Anwendung eines Kettenübertragungsmittels (RAFT) und eines verträglichen ersten Lösungsmittels ausgeführt wird, wobei das Verfahren das Verwenden eines basischen Materials zum Verhindern des Abbaus der säurelabilen Gruppen und daraufhin das Entfernen des basischen Materials von dem so gebildeten Copolymermaterial umfasst, wobei das basische Material aus der Gruppe ausgewählt wird bestehend aus Alkalimetall- und Erdalkalimetallcarbonaten, -phosphaten, -hydroxiden, -aminen und Mischungen davon.

2. Verfahren wie in Anspruch 1 aufgeführt, wobei das basische Material von dem Polymermaterial durch Inkontaktbringen des Polymermaterials in dem ersten Lösungsmittel mit einem zweiten Lösungsmittel und so Ausfällen des Polymers daraus, Filtrieren des ersten Lösungsmittels und des ausgefällten Polymers, um einen Polymerkuchen zu bilden, Waschen des ausgefällten Polymerkuchens mit zusätzlichen Anteilen des zweiten Lösungsmittels und Trocknen des Polymerkuchens entfernt wird.

3. Verfahren wie in Anspruch 2 aufgeführt, wobei (a) das getrocknete Polymer mit einem dritten Lösungsmittel in Kontakt gebracht wird, das mit einem Fotolack verträglich ist, und das Polymer darin gelöst wird und (b) die resultierende Lösung mit einer wässrigen sauren Lösung in Kontakt gebracht wird, um das basische Material von der Copolymerlösung zu entfernen, wodurch ein im Wesentlichen reines Copolymer hergestellt wird.

4. Verfahren wie in einem der Ansprüche 1 bis 3 aufgeführt, wobei das erste Lösungsmittel aus der Gruppe ausgewählt wird bestehend aus Aceton, Acetonitril, Amylacetat, Butylacetat, Butylalkohol, Diethylcarbonat, Di(ethylenglykol), Di(ethylenglykol)monobutylether, Di(ethylenglykol)monomethylether, Diethylketon, DMAC, (*N*,*N* Dimethylacetamid), *N*,*N*-Dimethylformamid, Dimethylsulfoxid, 1,4-Dioxan, Ethylacetat, Ethylencarbonat, Ethylenglykol, Ethylenglykoldiacetat, Isopropylalkohol, Methylamylketon, MPK (Methylpropylketon), MEK (Methylethylketon), Propylacetat, 1,2-Propylencarbonat, THF (Tetrahydrofuran), PGME (Propylenglykolmonomethylether) und Mischungen davon.

5. Verfahren wie in Anspruch 2 aufgeführt, wobei das zweite Lösungsmittel aus der Gruppe ausgewählt wird bestehend aus Hexan, Heptan, Octan oder ihren gemischten Isomeren; Ethern, Ligroin, niederen Alkylhalokohlenwasserstoffen, Methylenchlorid, Methanol, Isopropylethanol und Mischungen davon und wobei die Mischung davon zu einem hergestellten Polymer führt, das im Wesentlichen darin unlöslich ist.

6. Verfahren wie in Anspruch 1 aufgeführt, wobei das erste Monomer ein Monomer freier Säure ist ausgewählt aus der Gruppe bestehend aus Acrylsäure, Methacrylsäure und Mischungen davon und das zweite Monomer ein fluoriertes Monomer ist.

7. Verfahren wie in Anspruch 1 aufgeführt, wobei das Verfahren die Schritte umfasst des:
(1) Bereitstellens eines Initiators, basischen Materials und Lösungsmittels in einem Reaktor;
(2) Herstellens von zwei Zufuhrlösungen, wobei eine Lösung das Monomer freier Säure in einem Lösungsmittel enthält und eine zweite Lösung das Monomer oder Monomere enthält, die daran angelagerte saure labile Gruppen aufweisen, und dann Einführens derselben in den Reaktor zur Polymerisation;
(3) einen Reinigungsschritt, wobei das resultierende Polymer gekühlt und dann in ein zweites Lösungsmittel eingeführt wird, das das Polymer aus dem ersten Lösungsmittel ausfällt;
(4) Entfernens eines Teils oder wahlweise aller der Endgruppen durch Lösen der Polymerfeststoffe in dem ersten Lösungsmittel in einem Reaktor zusammen mit einem basischen Material und dann Einführens eines Endgruppenentfernungsmaterials in den Reaktor und Erhitzen zum Rückfluss, um die Endgruppenentfernung zu bestätigen;
(5) einen zweiten Reinigungsschritt, der Kühlen der Reaktorinhalte auf Raumtemperatur und dann Zusetzen eines zweiten Lösungsmittels zum Ausfällen der Polymerfeststoffe und dann Trocknen des Polymers umfasst;
(6) einen Metallreduktionsschritt, der das Lösen des Polymers in einem organischen Fotolacklösungsmittel und Inkontaktbringen der resultierenden organischen Lösung mit einem Chelatbildner in einer wässrigen Lösung, die das basische Material darin löst, und Trennen der Schichten umfasst; und
(7) Konzentrierens der organischen/Lösungsmittellösung und dann Filtrierens und Trocknens des Polymers.

8. Verfahren wie in einem der Ansprüche 1 bis 7 aufgeführt, umfassend einen Radikalinitiator ausgewählt unter Diisononanoylperoxid, Didecanoylperoxid, Di(3-carboxypropionyl)peroxid, Didodecanoylperoxid, 2,5-Dimethyl-2,5-di(2-ethylhexanoylperoxy)hexan, Dicumylperoxid, Dibenzoylperoxid und Dilauroylperoxid; Peroxyestern wie beispielsweise 3-Hydroxy-1,1-dimethylbutylperoxyneodecanoat, α-Cumylperoxyneodecanoat, 2-Hydroxy-1,1-dimethylbutylperoxyneoheptanoat, α-Cumylperoxyneoheptanoat, *t*-Amylperoxyneodecanoat, t-Butylperoxyneodecanoat, 3-Hydroxy-1,1-dimethylbutylperoxy-2-ethylhexanoat, t-Butylperoxyacetat, t-Butylperoxybenzoat, t-Butylperoxyoctoat, t-Butylperoxyisobutyrat, t-Amylperoxypivalat, t-Butylperoxypivalat, t-Amylperoxy-2-ethylhexanoat, t-Butylperoxy-2-ethylhexanoat, Di(2-ethylhexyl)peroxydicarbonat, Di(n-propyl)peroxydicarbonat, Di(sec-butyl)peroxydicarbonat, Diisopropylperoxydicarbonat und Dicyclohexylperoxydicarbonat; Azoverbindungen wie beispielsweise 2,2'-Azobis(isobutyronitril), 2,2'-Azobis(2-cyano-2-butan), Dimethyl-2,2'-azobis(methylisobutyrat), 4,4'-Azobis(4-cyanopentansäure), 4,4'-Azobis(4-cyanopentan-1-ol), 1, l'-Azobis(cyclohexancarbonitril), 2-(t-Butylazo)-2-cyanopropan, 2,2'-Azobis[2-methyl-*N*-(1,1)-bis(hydroxymethyl)-2-hydroxyethyl]propionamid, 2,2'-Azobis[2-methyl-*N*-hydroxyethyl)]-propionamid, 2,2'-Azobis(*N*,*N*'-dimethylenisobutyramidindihydrochlorid, 2,2'Azobis(2-amidinpropan)dihydrochlorid, 2,2'-Azobis(*N*,N'-dimethylenisobutyramin), 2,2'-Azobis(2-methyl-*N*-[1,1-bis(hydroxymethyl)-2-hydroxyethyl]propionamid), 2,2'-Azobis(2-methyl-*N*-[1,1-bis(hydroxymethyl)ethyl]propionamid, 2,2'Azobis[2-methyl-*N*-(2-hydroxyethyl)propionamid], 2,2'-Azobis(isobutyramid)dihydrat, 2,2'-Azobis(2,2,4-trimethylpentan) und 2,2'-Azobis(2-methylpropan); Peroxydisulfaten wie beispielsweise Kaliumperoxydisulfat und Ammoniumperoxydisulfat; und Hyponitriten wie beispielsweise Di-t-butylhyponitrit und Dicumylhyponitrit.

9. Verfahren wie in einem der Ansprüche 7 oder 8 aufgeführt, wobei der Initiator aus der Gruppe ausgewählt wird bestehend aus Dicumylperoxid, Dibenzoylperoxid, Dilauroylperoxid, t-Butylperoxyoctoat und t-Butylperoxyneodecanoat.

## Revendications

1. Procédé de polymérisation pour la préparation d'un matériau polymère dans lequel un monomère est un monomère d'acide libre, ayant la formule générale CH₂₌CR¹COOH, R¹ étant sélectionné dans le groupe constitué du groupe F, alkyle en C₁ à C₅, fluoroalkyle en C₁ à C₅ et hydrogéno, et l'autre monomère ou les autres monomères ayant des groupes acides labiles étant fixés à ceux-ci et la polymérisation étant conduite en utilisant un agent de transfert de chaîne (RAFT) et un premier solvant compatible, le procédé comprenant l'utilisation d'un matériau de base pour empêcher la dégradation des groupes acides labiles, et par la suite l'élimination du matériau de base du matériau copolymère ainsi formé, ledit matériau de base sélectionné dans le groupe constitué d'un métal alcalin et de carbonates de métal alcalino-terreux, des phosphates, des hydroxydes, des amines et des mélanges de ceux-ci.

2. Procédé tel qu'exposé selon la revendication 1, le matériau de base étant éliminé du matériau polymère par mise en contact du matériau polymère dans ledit premier solvant avec un second solvant et ainsi la précipitation du polymère à partir de celui-ci, la filtration dudit premier solvant et du polymère précipité pour former un tourteau de polymère, le lavage dudit tourteau de polymère précipité avec des portions additionnelles dudit second solvant, et le séchage dudit tourteau de copolymère.

3. Procédé tel qu'exposé selon la revendication 2, (a) ledit polymère séché étant mis en contact avec un troisième solvant compatible avec une photorésine et ledit polymère étant dissous à l'intérieur, et (b) la solution résultante étant mise en contact avec une solution acide aqueuse pour retirer le matériau de base de la solution de copolymère, préparant ainsi un copolymère sensiblement pur.

4. Procédé tel qu'exposé selon l'une quelconque des revendications 1 à 3, le premier solvant étant sélectionné dans le groupe constitué de l'acétone, de l'acétonitrile, de l'acétate d'amyle, de l'acétate de butyle, de l'alcool de butyle, du carbonate de diéthyle, du di(éthylène glycol), de l'éther de di(éthylène glycol)monobutyle, de l'éther de di(éthylène glycol)monométhyle, de la diéthyl cétone, du DMAC (*N*,*N*-diméthylacétamide), du *N,N-*diméthylformamide, du sulfoxyde de diméthyle, du 1,4-dioxane, de l'acétate d'éthyle, du carbonate d'éthylène, de l'éthylène glycol, du diacétate d'éthylène glycol, de l'alcool d'isopropyle, de la méthyl amyl cétone, MPK (méthyl propyl cétone), MEK (méthyl éthyl cétone), de l'acétate de propyle, du carbonate de 1,2-propylène, du THF (tétrahydrofurane), du PGME (éther monométhylique de propylène glycol) et des mélanges de ceux-ci.

5. Procédé tel qu'exposé selon la revendication 2, le second solvant étant sélectionné dans le groupe constitué de l'hexane, heptane, octane ou de leurs isomères mixtes; des éthers, de la ligroïne, des halohydrocarbures d'alkyle inférieur, du chlorure de méthylène, du méthanol, de l'isopropyléthanol, et des mélanges de ceux-ci, et le mélange de ceux-ci résultant en un polymère produit qui est sensiblement insoluble à l'intérieur.

6. Procédé tel qu'exposé selon la revendication 1, le premier monomère étant un monomère d'acide libre sélectionné dans le groupe constitué de l'acide acrylique, de l'acide méthacrylique et des mélanges de ceux-ci, et le second monomère étant un monomère fluoré.

7. Procédé tel qu'exposé selon la revendication 1, ledit procédé comprenant les étapes de:
(1) fourniture d'un initiateur, d'un matériau de base et d'un solvant dans un réacteur;
(2) préparation de deux solutions d'alimentation, une solution contenant ledit monomère d'acide libre dans un solvant, et une seconde solution contenant ledit monomère ou lesdits monomères ayant des groupes acides labiles fixés à ceux-ci, et ensuite leur alimentation dans le réacteur pour la polymérisation;
(3) une étape de purification, le polymère résultant étant refroidi et ensuite alimenté dans un second solvant qui précipite le polymère à partir du premier solvant;
(4) l'élimination d'une partie ou facultativement de tous les groupes terminaux par dissolution des solides polymères dans le premier solvant dans un réacteur conjointement à un matériau de base et ensuite l'alimentation d'un matériau d'élimination des groupes terminaux dans ledit réacteur, et le chauffage jusqu'au reflux pour confirmer l'élimination des groupes terminaux;
(5) une seconde étape de purification qui comprend le refroidissement des contenus du réacteur à la température ambiante et ensuite l'addition d'un second solvant pour précipiter les solides polymères et ensuite le séchage du polymère;
(6) une étape de réduction de métal qui comprend la dissolution du polymère dans un solvant organique de photorésine et la mise en contact de la solution organique résultante avec un agent chélatant dans une solution aqueuse qui dissout le matériau de base à l'intérieur, et la séparation des couches; et
(7) la concentration de la solution organique/solvant et ensuite la filtration et le séchage du polymère.

8. Procédé tel qu'exposé selon l'une quelconque des revendications 1 à 7, comprenant un initiateur de radicaux sélectionné parmi le peroxyde de diisononanoyle, le peroxyde de didécanoyle, le peroxyde de di(3-carboxypropionyle), le peroxyde de didodécanoyle, le 2,5-diméthyl-2,5-di(2-éthylhexanoylperoxy)hexane, le peroxyde de dicumyle, le peroxyde de dibenzoyle, et le peroxyde de dilauroyle; les peroxyesters, tels que le peroxynéodécanoate de 3-hydroxy-1,1-diméthylbutyle, le peroxynéodécanoate de α - cumyle, le peroxynéoheptanoate de 2-hydroxy-1,1-diméthylbutyle, le peroxynéoheptanoate de α -cumyle, le peroxynéodécanoate de *t*-amyle, le peroxynéodécanoate de *t*-butyle, le 3-hydroxy-1,1-diméthylbutylperoxy-2-éthylhexanoate, le peroxyacétate de *t*-butyle, le peroxybenzoate de *t*-butyle, le peroxyoctoate de *t*-butyle, le peroxy isobutyrate de *t*-butyle, le peroxypivalate de *t*-amyle, le peroxypivalate de *t*-butyle, le peroxy 2-éthylhexanoate de *t*-amyle, le peroxy 2-éthylhexanoate de *t*-butyle, le peroxydicarbonate de di(2-éthylhexyle), le peroxydicarbonate de di(*n*-propyle), le peroxydicarbonate de di(*sec*-butyle), le peroxydicarbonate de di-isopropyle, et le peroxydicarbonate de dicyclohexyle; les composés azoïques, tels que le 2,2'-azobis(isobutyronitrile), le 2,2'-azobis(2-cyano-2-butane), le 2,2'-azobis(isobutyrate de méthyle) de diméthyle, le 4,4'-azobis(acide 4-cyanopentanoïque), le 4,4'-azobis(4-cyanopentan-1-ol), le 1,1-azobis(cyclohexanecarbonitrile), le 2-(*t*-butylazo)-2-cyanopropane, le 2,2'-azobis[2-méthyl-*N*-(1,1)-bis(hydroxyméthyl)-2-hydroxyéthyl]propionamide, le 2,2'-azobis[2-méthyl-*N*-hydroxyéthyl)]-propionamide, le dichlorhydrate de 2,2'-azobis(*N*,*N*'-diméthylèneisobutyramidine, le dichlorhydrate de 2,2'-azobis(2-amidinopropane), la 2,2'-azobis(*N*,*N*'-diméthylèneisobutyramine), le 2,2'-azobis(2-méthyl-*N*-[1,1-bis(hydroxyméthyl)-2-hydroxyéthyl]propionamide), le 2,2'-azobis(2-méthyl-*N*-[1,1-bis(hydroxyméthyl)éthyl]propionamide, le 2,2'-azobis[2-méthyl-*N*-(2-hydroxyéthyl)propionamide], le 2,2'-azobis(isobutyramide) dihydraté, le 2,2'-azobis(2,2,4-triméthylpentane), et le 2,2'-azobis(2-méthylpropane); les peroxydisulfates, tels que le peroxydisulfate de potassium et le peroxydisulfate d'ammonium; et les hyponitrites, tels que l'hyponitrite de di-*t*-butyle et l'hyponitrite de dicumyle.

9. Procédé tel qu'exposé selon la revendication 7 ou 8, ledit initiateur étant sélectionné dans le groupe constitué du peroxyde de dicumyle, peroxyde de dibenzoyle, peroxyde de dilauroyle, peroxyoctoate de *t*-butyle, et peroxynéodécanoate de *t*-butyle.
